# EUROPÄISCHE PATENTANMELDUNG

(11) **EP 4 574 536 A1**
(43) Veröffentlichungstag der Anmeldung: **25.06.2025**
(21) Anmeldenummer: 24211958.4
(22) Anmeldetag: 11.11.2024
(51) Int. Cl.: B60L 50/60, B60T 1/00, B60T 1/06, B60T 13/12, B60T 13/22, B62D 55/00, B62D 55/08, B62D 55/32, F16D 55/02, F16D 55/28, F16D 55/38, F16D 55/40, F16D 63/00, F16D 65/00, F16D 65/12, F16D 65/18, F16D 65/853, B60K 7/00, B60K 17/04, F16D 121/02

(54) **ANTRIEBSSTRANG MIT RÜCKSEITIG ANGEORDNETER BREMSE**

(30) Priorität: 20.12.2023 DE 102023135952
(71) Anmelder: Pulsgetriebe Gear Systems GmbH, 76227 Karlsruhe (DE)
(72) Erfinder: Puls, Christoph, 76227 Karlsruhe (DE)
(74) Vertreter: Durm Patentanwälte PartG mbB

(57) **Zusammenfassung**

Die vorliegende Erfindung betrifft einen Antriebsstrang (12) für eine mobile Arbeitsmaschine (10), mit: einem Getriebe (24) mit wenigstens einer Gangstufe; einer elektrischen Antriebsmaschine (22) zum Breitstellen von Antriebsleistung für die mobile Arbeitsmaschine; und einer Bremse (26) zum Bremsen der mobilen Arbeitsmaschine; wobei der Antriebsstrang eine Hauptwelle (34) aufweist, die mit der elektrischen Antriebsmaschine, dem Getriebe und der Bremse antriebswirksam verbunden ist; das Getriebe an einer ersten Seite der elektrischen Antriebsmaschine angeordnet ist; die Bremse an einer der ersten Seite gegenüberliegenden Seite an der elektrischen Antriebsmaschine angeordnet ist; und die Bremse (26) eine hydraulisch betätigbare Lamellenbremse; eine Scheibenbremse; eine elektromagnetisch betätigte Bremse; oder eine Sperrklinke umfasst. Die vorliegende Erfindung betrifft ferner eine mobile Arbeitsmaschine.

## Beschreibung

Die vorliegende Erfindung betrifft einen Antriebsstrang sowie eine mobile Arbeitsmaschine.

Mobile Arbeitsmaschinen beispielsweise Baumaschinen, insbesondere Bagger, Bohrgeräte, Asphaltwalzen, landwirtschaftliche Fahrzeuge, insbesondere auch autonom fahrende (sog. AgBots), Gabelstapler und Flurförderfahrzeuge unterschiedlichster Art, insbesondere fahrerlose Transportsysteme, Pistenraupen, geschützte Fahrzeuge etc. weisen üblicherweise speziell ausgebildete Antriebsstränge auf, die sich insbesondere von Antriebssträngen für Personenkraftwagen oder Lastkraftwagen, unterscheiden.

Insbesondere sollen die Antriebsstränge für die vorgenannten Fahrzeuge bzw. Einsatzzwecke vorzugsweise geschützt und bauraumeffizient ausgebildet sein. Daher erfolgt bei derartigen Antriebssträngen üblicherweise ein dichter Zusammenbau der einzelnen Komponenten des Fahrzeugstrangs, also einem Getriebe, einer Antriebsmaschine und einer Bremse.

Bekannt ist hierbei, die Bremse zur Verringerung des Bauraumbedarfs in das Getriebe zu integrieren oder als separate Einheit zwischen Getriebe und Motor anzuordnen.

Diese kompakte Bauform hat insbesondere bezüglich der Wartungsfähigkeit des Antriebsstrangs Nachteile. Eine Zugänglichkeit der Bremse für eine Wartung oder einen Austausch ist erschwert.

Ferner kann Wärme weniger gut abgeführt werden. Bei einer Integration der Bremse in das Getriebe ist zudem das Ölvolumen im Getriebe verringert. Es kann außerdem zu einem Wärmeeintrag von der Bremse in das Schmiermittel für das Getriebe kommen, sodass das Schmiermittel für das Getriebe womöglich nicht dauerhaft in seinem optimalen Temperaturbereich verwendet werden kann.

Im Zuge der Dekarbonisierung findet vermehrt eine Elektrifizierung von vormals hydraulisch angetriebenen Kraftfahrzeugen und mobilen Arbeitsmaschinen statt. Die dafür obligatorischen elektrischen Antriebseinheiten sind wesentlich größer oder können nur durch eine massive Erhöhung der Drehzahl kompakter gebaut werden. Mit diesen hohen Drehzahlen geht eine massive Erhöhung der Plansch- und Reibungsverluste einher, weil die hohen Drehzahlen im Getriebe und v. a. in der integrierten Bremse hohe drehzahlabhängige Verluste erzeugen. So sinkt die Energieeffizienz und die Erwärmung steigt.

Es besteht daher ein Bedarf, einen Kraftfahrzeugantriebsstrang, insbesondere für eine Arbeitsmaschine, weiterzuentwickeln, um wenigstens einen der vorgenannten Nachteile zu überwinden.

Vor diesem Hintergrund stellt sich einem Fachmann folglich die Aufgabe des Schaffens eines verbesserten Kraftfahrzeugantriebsstrangs, insbesondere für eine mobile Arbeitsmaschine. Vorzugsweise sollen eine Kühlung verbessert, Ölstände für jede Komponente des Antriebsstrangs optimiert und/oder ein modularer Aufbau des Antriebsstrangs ermöglicht werden.

Gelöst wird diese Aufgabe durch einen Antriebsstrang für eine mobile Arbeitsmaschine, mit:
- einem Getriebe mit wenigstens einer Gangstufe, insbesondere mit genau einer einzigen Gangstufe, das an einer ersten Seite der elektrischen Antriebsmaschine angeordnet ist;
- einer elektrischen Antriebsmaschine zum Bereitstellen von Antriebsleistung für das Kraftfahrzeug;
- einer Bremse zum Bremsen des Kraftfahrzeugs, wobei
- die Bremse an einer der ersten Seite gegenüberliegenden Seite an der Antriebsmaschine angeordnet ist; und
- die Bremse
   eine hydraulische betätigbare Lamellenbremse;
   eine Scheibenbremse;
   eine elektromagnetisch betätigte Bremse; oder
   eine Sperrklinke umfasst.

Der Antriebsstrang weist eine Hauptwelle auf, die mit der elektrischen Antriebsmaschine, dem Getriebe und der Bremse antriebswirksam verbunden ist. Das heißt, die Hauptwelle verbindet die drei Komponenten des Antriebstrangs antriebswirksam miteinander.

Vorzugsweise verläuft die Hauptwelle zentral durch die drei Komponenten und ist besonders bevorzugt eine Rotorwelle der Antriebseinheit.

Durch das antriebswirksame Verbinden aller Antriebsstrangkomponenten mittels der Hauptwelle kann die Bremse die Hauptwelle und dadurch sowohl die

Antriebsmaschine als auch das Getriebe und schließlich die mobile Arbeitsmaschine bremsen.

Das Getriebe ist an einer ersten Seite der Antriebsmaschine angeordnet, wobei die Bremse an einer der ersten Seite gegenüberliegenden Seite an der Antriebsmaschine angeordnet ist. Mit anderen Worten ist die Bremse rückseitig an der Antriebsmaschine angeordnet. Die Antriebsmaschine ist mittig im Antriebsstrang angeordnet und sowohl von einem Getriebe als auch von der Bremse umgeben.

Die obige Aufgabe wird ferner gelöst von einer mobilen Arbeitsmaschine mit einem Antriebsstrang wie zuvor definiert und einem Energiespeicher zum Speichern von Energie zum Versorgen der elektrischen Antriebsmaschine.

Unter Energiespeicher kann eine Batterie, ein Akku oder eine andere Vorrichtung zum Speichern von elektrischer Energie verstanden werden.

Es versteht sich, dass der Energiespeicher auch ein Kraftstofftank, insbesondere ein Benzin- oder Gastank, wie bei herkömmlichen Kraftfahrzeugen, sein kann, falls eine Energieumwandlung, beispielsweise eine dieselelektrische Energieumwandlung stattfindet. Hierbei wird Energie des Kraftstoffs durch einen Verbrennungsmotor über einen Generator gewandelt und direkt am Fahrmotor verbraucht.

Bevorzugte Ausgestaltungen der Erfindung werden in den abhängigen Ansprüchen beschrieben. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere kann die mobile Arbeitsmaschine entsprechend den für den Antriebsstrang in den abhängigen Ansprüchen beschriebenen Ausgestaltungen ausgeführt sein.

Durch ein Getriebe mit wenigstens einer Gangstufe kann ein effizienter sowie bauraum- und gewichtsoptimierter Antriebsstrang geschaffen werden. Mittels einer Hauptwelle kann sowohl Antriebsleistung als auch Bremsleistung effizient dem Getriebe und schließlich den Rädern oder Ketten der mobilen Arbeitsmaschine zugeführt werden. Insbesondere ermöglicht eine Hauptwelle, die vorzugsweise durchgängig ist, eine kosteneffiziente Herstellung des Antriebsstrangs. Durch die vorteilhafte Anordnung der Bremse an der Rückseite der elektrischen Antriebsmaschine können die einzelnen Komponenten konstruktiv einfach hergestellt sein. Insbesondere kann einer negativen Beeinflussung der Komponenten gegeneinander, z. B. durch Abwärme oder Abrieb, entgegengewirkt werden.

Zudem führt die vorteilhafte Anordnung der Bremse zu einer verbesserten Kühlung, beispielsweise direkt durch den Fahrtwind, Regen oder Schnee. Ölstände können für jede Komponente des Antriebsstrangs getrennt bestimmt werden und optimal für die jeweilige Komponente, also Bremse, Antriebseinheit und/oder Getriebe, eingestellt werden.

Durch die Trennung von Bremse und Getriebe kann ein größeres Ölvolumen im Getriebe aufgenommen werden, was zu einer verbesserten Ölqualität, einem erhöhten Wärmeabtransport und einer geringeren Empfindlichkeit gegen Schwankungen des Ölstands im Getriebe führt. Außerdem kann so jeweils für Bremse und Getriebe der optimale Ölstand realisiert werden, da die Anforderungen unterschiedlich sind.

Ferner kann durch das Trennen der Komponenten Bremse und Getriebe ein Ölwechsel sowie eine Wartung vereinfacht durchgeführt werden. Es versteht sich, dass hierbei auch eine bessere Zugänglichkeit zur Bremse, beispielsweise für Überprüfung und Wartung, gegeben ist. Insbesondere ist hierfür kein Manipulieren des Getriebes oder der Antriebseinheit, und insbesondere kein Abbau der Antriebseinheit, nötig, sodass das Lüftspiel, ein Verschleiß und/oder der Zustand von beispielsweise Bremslamellen erleichtert überprüft werden können. Es versteht sich, dass ein Austausch von Lamellen, Dichtungen und/oder Kühl-/Schmiermittel ebenfalls vereinfacht ist.

Elektrische Antriebsmaschinen zeichnen sich insbesondere dadurch aus, dass sie abgasfrei betrieben werden können. Ferner kann auf geringem Bauraum ein hohes Drehmoment erzeugt werden, das bereits bei niedrigen Drehzahlen anliegt. Zudem decken elektrische Antriebsmaschinen ein breites Drehzahlband ab. Hierbei kann die elektrische Antriebsmaschine besonders vorteilhaft mit einem Planetenradsatz, der eine hohe Übersetzung ermöglicht, verwendet werden.

In bevorzugter Ausführungsform umfasst das Getriebe einen Planetenradsatz, und bevorzugt einen weiteren Planetenradsatz, wobei ein Sonnenrad des Planetenradsatzes mit der Hauptwelle verbunden ist, vorzugsweise ein Planetenradträger mit dem weiteren Planetenradsatz antriebswirksam verbunden ist und das Getriebe einen Abtrieb, vorzugsweise am Hohlrad des Planetenradsatzes, aufweist. Mittels des Abtriebs kann bevorzugt direkt Antriebsleistung zu einem Rad und/oder einer Kette der mobilen Arbeitsmaschine übertragen werden. Unter direkt ist insbesondere zu verstehen, dass der Abtrieb übersetzungsfrei die Kette und/oder ein Rad antreibt. Beispielsweise kann der Abtrieb Mittel aufweisen, die antriebswirksam mit der Kette verbunden sind. Alternativ kann der Abtrieb eine Radnabe umfassen, die drehfest mit einem Rad verbunden ist und so Antriebsleistung überträgt.

Mittels eines oder mehrerer Planetensätze, alternativ auch mittels eines gestuften Planetenradsatzes, kann ein kompakt bauendes Getriebe für den Antriebsstrang geschaffen werden, das sich durch eine hohe Übersetzung und hohe Robustheit auszeichnet.

Vorteilhafterweise können ein Planetenradsatz bzw. die Planetenradsätze im Wesentlichen rotationssymmetrisch ausgebildet sein und um die Hauptwelle herum angeordnet werden, sodass beim Betrieb des Getriebes keine oder nur eine geringe Unwucht entsteht.

Durch einen Abtrieb, mittels dessen Antriebsleistung direkt zu einem Rad und/oder einer Kette der mobilen Arbeitsmaschine übertragbar ist, kann ein technisch einfaches Getriebe mit wenigen Bauteilen geschaffen werden. Die vergleichsweise geringe Anzahl an Bauteilen kann eine Ausfallsicherheit des Getriebes erhöhen. Es kann ein robustes und zuverlässiges Getriebe geschaffen werden.

Weiter bevorzugt ist die Bremse eine Federdrucklamellenbremse, die insbesondere hydraulisch betätigbar ist und vorzugsweise hydraulisch gelüftet werden kann. Hierbei kann die Bremse sowohl als Halte-Instrument als auch als Not-Aus und/oder Betriebsbremse verwendet werden. Die Bremse kann zuverlässig auf geringem Bauraum eine hohe Bremswirkung entfalten. Je nach Anwendungsfall kann eine derartige Bremse technisch einfach entsprechend dimensioniert werden.

Besonders bevorzugt weist der Antriebsstrang eine Kühlfluid-Passage auf, die durch die Bremse und vorzugsweise durch die Antriebsmaschine und in das Getriebe verläuft. Mittels der Kühlfluid-Passage kann ein Kühlmedium und/oder gekühltes Schmiermedium zu- und/oder abgeführt werden. Die Abfuhr oder Zufuhr kann durch das Gehäuse erfolgen. Durch die Kühlfluid-Passage kann einerseits ein Kühlkreislauf geschaffen werden, was eine Haltbarkeit und Effizienz des Antriebsstrangs erhöht. Ferner können Wartungsintervalle erhöht werden sowie höhere Drehzahlen und Leistungen ermöglicht werden. Andererseits kann ein Nachfüllen und/oder Austauschen des Kühl- bzw. Schmiermediums vereinfacht erfolgen. Vorzugsweise kann ein Befüllen, Nachfüllen oder Austausch des Kühlmediumss und/oder Schmiermediums mit wenigen Handgriffen am Antriebsstrang erfolgen, da die rückseitig angeordnete Bremse und damit die Kühlfluid-Passage vorzugsweise im Wesentlichen frei zugänglich ist.

In einer weiteren vorteilhaften Ausgestaltung ist die Kühlfluid-Passage dazu ausgebildet, dem Getriebe und der Bremse dasselbe Kühl- und/oder Schmiermedium zuzuführen. In anderen Worten ist das Kühl- oder Schmiermedium dasselbe für das Getriebe und die Bremse. Durch das Verwenden desselben Kühl-/-Schmiermediums für Komponenten des Antriebsstrangs kann ein kosteneffizienter Antriebsstrang geschaffen werden. Insbesondere kann ein Abdichten der einzelnen Komponenten vereinfacht erfolgen, da lediglich ein Austritt des Kühl-/Schmiermediums aus dem Antriebsstrang heraus verhindert werden muss. Es muss nicht zusätzlich verhindert werden, dass sich verschiedene Medien mischen. Ferner wird nur ein Vorrats- und/oder Ausgleichsbehälter für das Kühl-/Schmiermedium benötigt oder es können das Getriebe, die Bremse und/oder die Antriebsmaschine Kühlmedium aufnehmen und wie ein Ausgleichsbehälterwirken. Es versteht sich, dass, falls ein Kühlkreislauf geschaffen werden soll, dieser vorzugsweise mittels nur einer Fördervorrichtung für das Kühl- oder Schmiermedium geschaffen werden kann.

In einer bevorzugten Ausgestaltung ist der Antriebsstrang eine Baugruppe, die aus Unterbaugruppen zusammengesetzt ist. Die Bremse, die elektrische Antriebsmaschine und/oder das Getriebe sind jeweils eine Unterbaugruppe. Durch den Aufbau des Antriebsstrangs als Baugruppe kann ein modularer Aufbau des Antriebsstrangs erfolgen. Insbesondere können die einzelnen Komponenten entsprechend dem Anwendungsfall ausgelegt sein. Eine Bremse kann leicht als komplettes Bauteil getauscht werden. Das Getriebe kann bedarfsgerecht, speziell auf die Anforderungen angepasst, ausgeführt sein. Der modulare Aufbau als Baugruppe aus Unterbaugruppen ermöglicht das Schaffen eines individuell angepassten Antriebsstrangs mit geringem Aufwand. Es kann eine Art Serienfertigung für individuell angepasste Antriebsstränge ermöglicht werden.

In besonders bevorzugter Ausführungsform ist das Getriebe und/oder die Bremse mit der Antriebsmaschine, insbesondere einem Gehäuse der Antriebsmaschine, verbunden, insbesondere verschraubt, vernietet, geschweißt und/oder verklebt. Hierdurch kann sowohl Gewicht als auch Bauraum eingespart werden, da auf zusätzliche Befestigungsteile und/oder eine weitere Umhausung verzichtet werden kann. Hierdurch kann ein modularer Aufbau verbessert realisiert werden, da keine speziell angefertigten Komplettumhausungen, die den Antriebsstrang komplett umgeben, benötigt werden. Die einzelnen Komponenten können an dafür vorgesehenen Stellen miteinander verschraubt werden. Somit wird zum Schaffen des Antriebsstrangs vorzugsweise nur eine Verschraubung, eine Vernietung, eine Schweißnaht und/oder eine Klebefalz benötigt. Vorzugsweise wird durch das Verbinden eine gemeinsame Umhausung für den Antriebsstrang geschaffen.

In bevorzugter Ausgestaltung der mobilen Arbeitsmaschine umfasst die mobile Arbeitsmaschine einen weiteren Antriebsstrang wie zuvor definiert, wobei die mobile Arbeitsmaschine ein Kettenfahrzeug mit zwei Ketten oder wenigstens zwei angetriebenen Rädern ist und jeder Kette oder jedem angetriebenen Rad jeweils wenigstens ein Antriebsstrang zugeordnet ist. Es versteht sich, dass auch mehrere Antriebsstränge einer Kette zugeordnet sein können, um die Antriebsleistung der Kette zu erhöhen. Durch das Verbinden wenigstens eines Antriebsstrangs mit jeweils einer Kette oder jeweils einem Rad kann eine mobile Arbeitsmaschine mit hoher Manövrierfähigkeit geschaffen werden.

Unter "antriebswirksam verbunden" soll in diesem Zusammenhang insbesondere eine nicht schaltbare Verbindung zwischen zwei Bauteilen verstanden werden, welche zu einer permanenten Übertragung einer Drehzahl, eines Drehmoments und/oder Antriebsleistung vorgesehen ist. Die Verbindung kann dabei sowohl direkt als auch über eine Festübersetzung erfolgen. Die Verbindung kann beispielsweise über eine feste Welle, eine Verzahnung, insbesondere eine Stirnradverzahnung und/oder ein Umschlingungsmittel, insbesondere ein Zugmittelgetriebe, und/oder über eine Verschraubung oder dergleichen erfolgen. Ein Festsetzen eines Elements eines Planetenradsatzes ist insbesondere als ein Blockieren einer Drehung des Elements um seine Rotationsachse zu verstehen. Vorzugsweise wird dabei das Element drehfest mit einem statischen Bauteil wie einem Rahmen und/oder einem Getriebegehäuse verbunden. Es ist auch denkbar, das Element bis zu einem Stillstand zu bremsen.

Unter "antriebswirksam verbindbar", "kann antriebswirksam verbunden werden" oder "ist zum antriebswirksamen Verbinden ausgebildet" soll in diesem Zusammenhang insbesondere ein schaltbares Verbinden zwischen zwei Bauteilen verstanden werden, welches in einem geschlossenen Zustand zu einer temporären Übertragung einer Drehzahl, eines Drehmoments und/oder einer Antriebsleistung vorgesehen ist. In einem geöffneten Zustand überträgt das schaltbare Verbinden vorzugsweise temporär im Wesentlichen keine Drehzahl, kein Drehmoment und/oder keine Antriebsleistung.

Ein Aktor ist vorliegend insbesondere ein Bauteil, das ein elektrisches oder fuldisches Signal in eine mechanische Bewegung umsetzt.

Die Erfindung wird nachfolgend anhand einiger ausgewählter Ausführungsbeispiele im Zusammenhang mit den beiliegenden Zeichnungen näher beschrieben und erläutert. Es zeigen:
- Figur 1: eine schematische Draufsicht auf eine mobile Arbeitsmaschine mit einem erfindungsgemäßen Antriebsstrang;
- Figur 2: eine schematische Darstellung eines erfindungsgemäßen Antriebsstrangs;
- Figur 3: eine detaillierte Darstellung eines erfindungsgemäßen Antriebsstrangs; und
- Figuren 4a und 4b: perspektivische Darstellungen eines Antriebsstrangs.

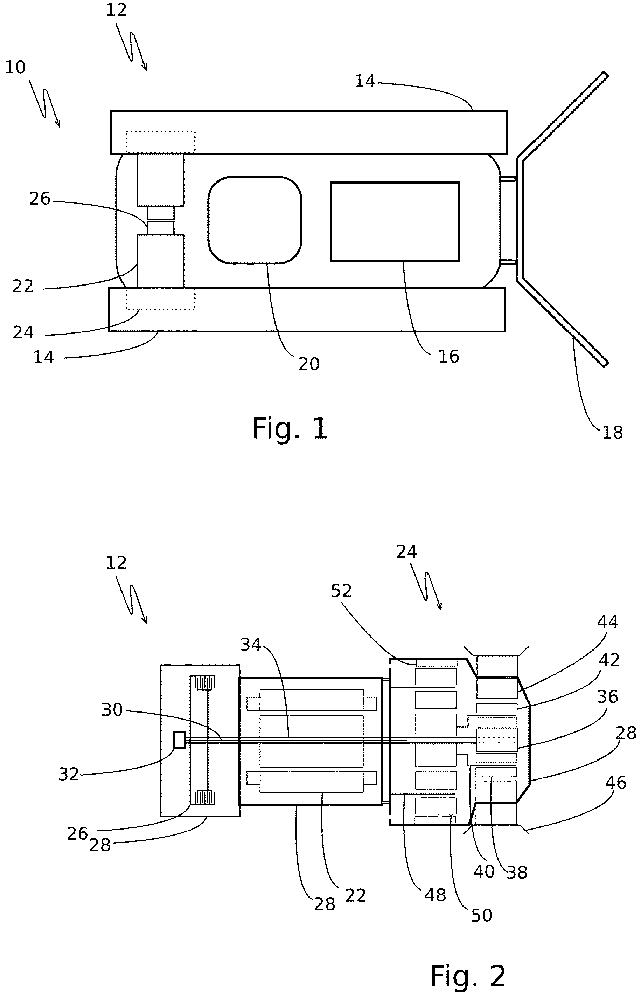

Figur 1 zeigt eine schematische vereinfachte Draufsicht auf eine mobile Arbeitsmaschine 10 mit einem erfindungsgemäßen Antriebsstrang 12. Die mobile Arbeitsmaschine 10 ist in dem gezeigten Beispiel als Pistenraupe ausgebildet und weist zwei Ketten 14, ein Führerhaus 16 und eine Schneeschaufel 18 auf.

Ferner umfasst die mobile Arbeitsmaschine 10 einen Energiespeicher 20, der dazu ausgebildet ist, eine Antriebsmaschine 22 in Form einer elektrischen Antriebsmaschine mit Energie zu versorgen, um ein Getriebe 24, die Ketten 14 und schließlich die mobile Arbeitsmaschine 10 anzutreiben. Rückseitig an der Antriebsmaschine 22 ist eine Bremse 26 angeordnet, die dazu ausgebildet ist, sowohl die Antriebsmaschine 22 als auch das Getriebe 24 und schlussendlich die Ketten 14 und die mobile Arbeitsmaschine 10 zu bremsen.

In Figur 2 ist ein Antriebsstrang 12 schematisch detailliert dargestellt.

Der Antriebsstrang 12 ist aus drei Baugruppen 28 aufgebaut, wobei eine erste Baugruppe 28 im Bild links angeordnet ist und eine Bremse 26, insbesondere eine hydraulisch gelüftete Lamellenbremse, aufweist.

Ferner umfasst die erste Baugruppe 28 eine Kühlfluid-Passage 30, die sich durch alle Baugruppen 28 hindurch erstreckt und mit einer Fluidfördervorrichtung 32 verbunden ist, um Fluid in und oder durch die einzelnen Baugruppen 28 zu fördern. Die Kühlfluid-Passage 30 verläuft dabei im Wesentlichen parallel zu einer Längsachse des Antriebsstrangs 12 und ist mittig in diesem angeordnet.

Die Bremse 26 ist mit einer Hauptwelle 34 antriebswirksam verbunden, wobei die Hauptwelle 34 im Wesentlichen parallel zur Kühlfluid-Passage 30 verläuft und die Komponenten der drei Baugruppen 28 antriebswirksam miteinander verbindet.

Vorzugsweise ist die Hauptwelle 34 als Hohlwelle ausgebildet, wobei die Kühlfluid-Passage 30 innerhalb der Hauptwelle 34 verläuft. Insbesondere kann die Hohlwelle zum Leiten des Fluids verwendet werden.

In der mittig angeordneten Baugruppe 28 ist die Antriebsmaschine 22, in dem gezeigten Beispiel eine elektrische Antriebsmaschine, angeordnet. Die Hauptwelle 34 bildet einen Rotor der Antriebsmaschine 22. Es versteht sich, dass die Hauptwelle 34 einstückig ausgebildet sein kann. Alternativ kann die Hauptwelle 34 auch in einzelnen Abschnitten vorliegen, wobei die einzelnen Abschnitte antriebswirksam miteinander verbunden sind.

Eine weitere Baugruppe 28 ist neben der zweiten Baugruppe 28 angeordnet und weist ein Getriebe 24 auf. In dem gezeigten Beispiel umfasst das Getriebe 24 einen ersten Planetenradsatz und einen zweiten Planetenradsatz.

Ein Sonnenrad 36 des ersten Planetenradsatzes ist antriebswirksam mit der Hauptwelle 34 verbunden und kämmt mit einem Planetenrad 38, das an einem Planetenradträger 40 aufgenommen ist. Der Planetenradträger 40 ist mit einem weiteren Planetenradsatz verbunden, dessen Planetenradträger 48 festgesetzt ist, wobei das Planetenrad 50 des zweiten Planetenradsatzes mit einem Hohlrad 52 des zweiten Planetenradsatzes kämmt. Die Hohlräder 44, 52 der beiden Planetenradsätze sind antriebswirksam miteinander verbunden, wobei an dieser Verbindung eine Aufnahme 46 für die Kette der mobilen Arbeitsmaschine angeordnet ist.

Es versteht sich, dass die Aufnahme 46 auch als Radnabe ausgebildet sein kann, falls der Antriebsstrang 12 für ein Räderfahrzeug und nicht für ein Kettenfahrzeug verwendet werden soll.

Die Antriebsmaschine 22 kann mittels der Hauptwelle 34 dem Getriebe 24 Antriebsleistung zuführen, die durch die vorgenannte Anordnung der Zahnräder der Planetenradsätze übersetzt wird und direkt, also ohne weitere Übersetzung, der Ketten-Aufnahme 46 zugeführt werden kann. Ein Abtrieb des Getriebes 24 kann in den Hohlrädern 44, 52 gesehen werden.

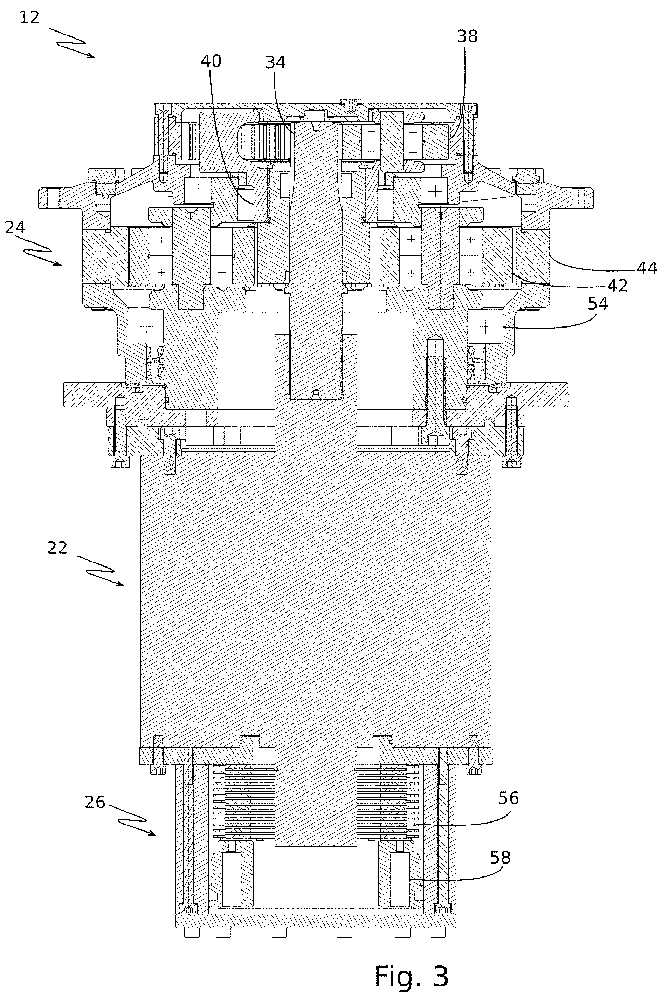

Schematisch dargestellt ist für jede der Baugruppen 28 jeweils eine Umhausung. Es versteht sich, dass der Antriebsstrang 12 durch Verbinden der Umhausungen geschaffen werden kann, wobei hierfür verschiedene Techniken zum Einsatz kommen können. Bevorzugt wird der Antriebsstrang 12 durch Verschrauben der einzelnen Baugruppen 28 geschaffen, wie es in Figur 3 in einem detailreichen technischen Schnitt schematisch gezeigt ist.

Der Antriebsstrang 12 gemäß der Figur 3 entspricht dabei im Wesentlichen dem in Figur 2 gezeigten Antriebsstrang, wobei der Antriebsstrang 12 gemäß der Figur 3 detailreicher dargestellt ist. Gleiche Bezugszeichen beziehen sich auf gleiche Merkmale und werden nicht erneut erläutert.

Im Unterschied zu der in Figur 2 gezeigten Darstellung sind verschiedene Lager 54 im Antriebsstrang 12 dargestellt. Ferner ist die Bremse 26 detailreicher gezeigt, wobei Lamellen 56 der Bremse 26 durch einen Fluidaktor 58, also einen Fluidkolben gelöst werden können. Die Bremse 26 umfasst Federn, die auf die Lamellen 56 eine Druckkraft ausüben, sodass die Lamellen 56 aneinandergedrückt werden und die Hauptwelle 34 bremsen. Durch Hydraulikdruck kann dieser Fluidkolben der durch die Federn ausgeübten Kraft entgegenwirken, sodass die Lamellen 56 frei sind, also die Bremse 26 gelüftet wird, und keine Bremswirkung mehr stattfindet.

Ein Teil der Lamellen 56 ist antriebswirksam mit der Hauptwelle 34 verbunden. Ein weiterer Teil der Lamellen 56 ist drehfest, beispielsweise mit dem Gehäuse der Bremse 26, verbunden. Vorzugsweise sind die Lamellen 56 in Richtung der Hauptwelle 34 gesehen jeweils alternierend an der Hauptwelle 34 und am Gehäuse der Bremse 26 angeordnet.

Durch Beaufschlagung der Feder mittels des Fluidaktors 58 werden die Lamellen 56 auseinandergepresst, sodass die Hauptwelle 34 freigängig ist. Wird keine Kraft durch den Fluidaktor 58 ausgeübt, werden die Lamellen 56 aufeinandergepresst und bremsen die Hauptwelle 34.

Da die Hauptwelle 34 über das Getriebe 24 mit dem Abtrieb nicht schaltbar antriebswirksam verbunden ist, kann durch Bremsen der Hauptwelle 34 sowohl die elektrische Antriebsmaschine 22 als auch das Getriebe 24 als auch die komplette mobile Arbeitsmaschine gebremst werden.

Im Unterschied zu der in Figur 2 gezeigten Ausführungsform ist die Verbindung der einzelnen Baugruppen mittels Schrauben detailliert schematisch dargestellt. Ein Fachmann erkennt hierbei, dass je nach Anwendungsfall einzelne Komponenten des Antriebsstrangs 12 getauscht werden können. Insbesondere könnte anstatt der gezeigten Planetenradsätze ein Stirnradgetriebe oder ein Fluidgetriebe Anwendung finden. Die gezeigte Ausführungsform der Bremse 26 ist ebenfalls sowohl in der Dimension als auch im Bremsentyp nur beispielhaft zu verstehen. Es versteht sich, dass entsprechend größer oder kleiner dimensionierte Bremsen, insbesondere auch Bremsen eines anderen Typs Anwendung finden können.

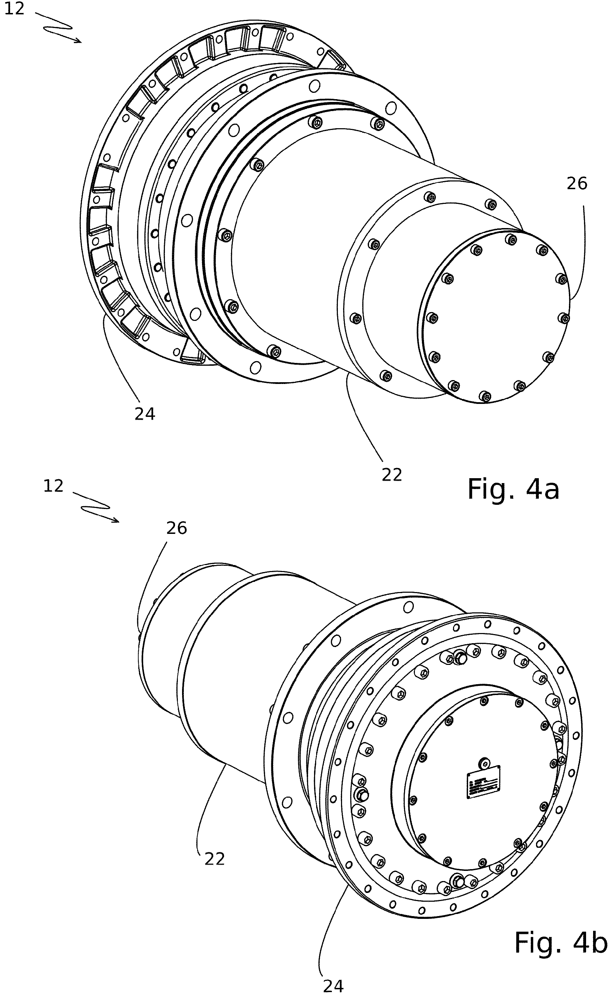

In den Figuren 4a und 4b ist schematisch perspektivisch eine mögliche Ausführungsform eines Antriebsstrangs 12 gezeigt. Der Antriebsstrang 12 ist im Wesentlichen rotationssymmetrisch aufgebaut. Ein Durchmesser des Getriebes 24 samt Verbindungseinheit zur Kette und/oder zum Rad ist größer als ein Durchmesser der Antriebsmaschine 22.

Ein Durchmesser der Bremse 26 ist wiederum kleiner als ein Durchmesser der Antriebsmaschine 22.

Die Schrauben zur Verschraubung der einzelnen Unterbaugruppen miteinander sind symmetrisch bezüglich des Umfangs verteilt. Es versteht sich, dass in den

Figuren 4a und 4b nur eine beispielhafte mögliche Ausführungsform der Erfindung zum besseren Verständnis derselben gezeigt ist und die Erfindung in einer Vielzahl von Geometrien der Antriebsstränge 12 verwirklicht sein kann.

Die Erfindung wurde anhand der Zeichnungen und der Beschreibung umfassend beschrieben und erklärt. Die Beschreibung und die Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden.

## Patentansprüche

1. Antriebsstrang (12) für eine mobile Arbeitsmaschine (10), mit:
einem Getriebe (24) mit wenigstens einer Gangstufe;
einer elektrischen Antriebsmaschine (22) zum Breitstellen von Antriebsleistung für die mobile Arbeitsmaschine (10); und
einer Bremse (26) zum Bremsen der mobilen Arbeitsmaschine (10); wobei
der Antriebsstrang (12) eine Hauptwelle (34) aufweist, die mit der elektrischen Antriebsmaschine (22), dem Getriebe (24) und der Bremse (26) antriebswirksam verbunden ist;
das Getriebe (24) an einer ersten Seite der elektrischen Antriebsmaschine (22) angeordnet ist;
die Bremse (26) an einer der ersten Seite gegenüberliegenden Seite an der elektrischen Antriebsmaschine (22) angeordnet ist; und
die Bremse (26)
eine hydraulische betätigbare Lamellenbremse;
eine Scheibenbremse;
eine elektromagnetisch betätigte Bremse; oder
eine Sperrklinke umfasst.

2. Antriebsstrang (12) nach Anspruch 1, wobei
das Getriebe (24) einen Planetenradsatz, bevorzugt einen gestuften Planetenradsatz oder einen zusätzlichen weiteren Planetenradsatz, umfasst;
ein Sonnenrad (36) des Planetenradsatzes mit der Hauptwelle (34) verbunden ist;
vorzugsweise ein Planetenradträger (40) mit einem Sonnenrad des weiteren Planetenradsatzes antriebswirksam verbunden ist; und
das Getriebe einen Abtrieb, vorzugsweise am Hohlrad (44) oder Planetenradträger (40), aufweist, mittels dessen, bevorzugt direkt, Antriebsleistung zu einem Rad und/oder einer Kette (14) der mobilen Arbeitsmaschine (10) übertragbar ist.

3. Antriebsstrang (12) nach einem der vorstehenden Ansprüche, wobei die Bremse (26) eine vorzugsweise hydraulisch gelüftete, Federdruck-Lamellenbremse umfasst.

4. Antriebsstrang (12) nach einem der vorstehenden Ansprüche, mit einer Kühlfluid-Passage (30), die durch die Bremse (26), durch die Antriebsmaschine (22) und in das Getriebe (24) verläuft, mittels der ein Kühlmedium zu-und/oder abführbar ist.

5. Antriebsstrang (12) nach dem vorstehenden Anspruch, wobei die Kühlfluid-Passage (30) dazu ausgebildet ist, dem Getriebe (24) und der Bremse (26) dasselbe Kühlmedium zuzuführen.

6. Antriebsstrang (12) nach einem der vorstehenden Ansprüche, wobei;
der Antriebsstrang eine Baugruppe (28) ist, die aus Unterbaugruppen zusammengesetzt ist;
die Bremse (26) eine Unterbaugruppe ist; und/oder
das Getriebe (24) eine Unterbaugruppe ist.

7. Antriebsstrang (12) nach einem der vorstehenden Ansprüche, wobei das Getriebe (24) und/oder die Bremse (26) mit der elektrischen Antriebsmaschine (22), insbesondere einem Gehäuse der elektrischen Antriebsmaschine, verbunden, insbesondere verschraubt, vernietet, geschweißt und oder verklebt sind.

8. Mobile Arbeitsmaschine (10) mit:
einem Antriebsstrang (12) nach einem der Ansprüche 1 bis 7; und
einem Energiespeicher (20) zum Speichern von Energie zum Versorgen der Antriebsmaschine (22).

9. Mobile Arbeitsmaschine (10) nach dem vorstehenden Anspruch, mit:
einem weiteren Antriebsstrang (12) nach einem der Ansprüche 1 bis 7; wobei die mobile Arbeitsmaschine ein Kettenfahrzeug mit zwei Ketten (14) ist und jeder Kette jeweils wenigstens ein Antriebsstrang zugeordnet ist.

10. Mobile Arbeitsmaschine (10) nach dem vorstehenden Anspruch, mit:
einem weiteren Antriebsstrang (12) nach einem der Ansprüche 1 bis 7; wobei die mobile Arbeitsmaschine wenigstes zwei angetriebene Räder aufweist und jedem angetriebenen Rad jeweils wenigstens ein Antriebsstrang zugeordnet ist.
